# EUROPÄISCHE PATENTSCHRIFT

(11) **EP 3 500 467 B1**
(45) Veröffentlichungstag und Bekanntmachung des Hinweises auf die Patenterteilung: **09.04.2025**
(21) Anmeldenummer: 17758450.5
(22) Anmeldetag: 10.08.2017
(51) Int. Cl.: B60W 50/00, B60W 50/08, B60W 50/10, G01C 21/36, B60R 16/037

(54) **VERFAHREN ZUR NAVIGATIONSZIELABHÄNGIGEN FAHRZEUGPARAMETEREINSTELLUNG**
METHOD FOR NAVIGATION DESTINATION DEPENDENT VEHICLE PARAMETER ADJUSTMENT
PROCÉDÉ DE RÉGLAGE DES PARAMÈTRES D'UN VÉHICULE EN FONCTION DE LA DESTINATION DE NAVIGATION

(30) Priorität: 17.08.2016 DE 102016215312
(43) Veröffentlichungstag der Anmeldung: 26.06.2019
(73) Patentinhaber: Bayerische Motoren Werke Aktiengesellschaft, 80809 München (DE)
(72) Erfinder: DIEWALD, Stefan, 85368 Moosburg a. d. Isar (DE)
(86) Internationale Anmeldenummer: PCT/EP2017/070377
(87) Internationale Veröffentlichungsnummer: WO 2018/033475

(56) Entgegenhaltungen:
- DE-A1- 10 315 047
- DE-A1- 10 315 047
- DE-A1- 102012 003 292
- DE-A1- 102012 003 292
- US-A1- 2010 023 544
- US-A1- 2010 023 544

## Beschreibung

Die vorliegende Erfindung betrifft ein Verfahren zur navigationszielabhängigen Einstellung wenigstens eines Fahrzeugparameters. Weiter betrifft die Erfindung ein Fahrzeug, das zur Ausführung des Verfahrens ausgestaltet ist.

US 2010/02344 A1 beschreibt ein Verfahren zur adaptiven Medienwiedergabebasierend auf einem Ziel. Das Verfahren umfasst ein Bestimmen eines oder mehrerer Ziele, ein Sammeln von Medieninhalten, die für ein oder mehrere Ziele relevant sind oder diese beschreiben, ein Zusammenstellen der Medieninhalte zu einem Programm und das Ausgeben des Programms.

DE 103 15 047 A1 beschreibt eine Vorrichtung zur positionsabhängigen Steuerung von Fahrzeugfunktionen mit einer Steuereinheit und einer Speichereinheit für Steuerdaten, insbesondere Positionsdaten und Steuerbefehlen für Fahrzeugfunktionen, wobei die Steuerdaten mindestens teilweise änderbar sind.

DE 10 2012 003 292 A1 beschreibt ein Verfahren zum Bereitstellen einer Navigationsfunktion in einem Kraftfahrzeug, bei dem ein Navigationsziel erfasst wird mehrere Einstellungen für Parametersätze bestimmt werden, die systemseitig und/oder nutzerseitig einstellbare Einzelparameter zum Betrieb des Kraftfahrzeugs und/oder zu der Navigationsroute umfassen, von denen die benötigte Energiemenge des Kraftfahrzeugs für die Fahrt zum erfassten Navigationsziel abhängt, zu mehreren der bestimmten Einstellungen jeweils die benötigte Energiemenge für die Fahrt des Kraftfahrzeugs zum erfassten Navigationsziel berechnet wird, aus der benötigten Energiemenge und der im Kraftfahrzeug verfügbaren Energiemenge eine Restenergiemenge berechnet wird und für mehrere der bestimmten Einstellungen jeweils ein Navigationsmodus erzeugt oder ausgewählt wird, wobei für jeden der Navigationsmodi die basierend auf der berechneten Restenergiemenge prognostizierte Restreichweite ausgehend vom erfassten Navigationsziel in einer Navigationskarte visualisiert wird.

Es ist ein Ziel der Erfindung, den wenigstens einen Fahrzeugparameter abhängig von dem Navigationsziel einzustellen, basierend auf einer Zusatzinformation, die für das Navigationsziel abrufbar gespeichert ist. Insbesondere ist es Ziel der Erfindung, das Fahrerlebnis eines Fahrzeugnutzers durch Veränderung des wenigstens einen Fahrzeugparameters abhängig von der Zusatzinformation zu beeinflussen. Das bedeutet, dass insbesondere Fahrzeugparameter im Innenraum bzw. der Fahrgastzelle eines Fahrzeugs eingestellt werden, die auch Interieur-Parameter genannt werden. Die Zusatzinformation kann ein Ereignis an dem Navigationsziel und/oder eine Eigenschaft des Navigationsziels betreffen. Die Zusatzinformation wird verwendet, um einen einzustellenden Fahrzeugparameter zu bestimmen und diesen gemäß der Zusatzinformation und/oder damit assoziierten Daten einzustellen.

Die Erfindung stellt daher ein Verfahren und eine Vorrichtung gemäß der unabhängigen Ansprüche bereit. Weiterbildungen der Erfindung sind Gegenstand der abhängigen Ansprüche.

In einem ersten Aspekt wird ein Verfahren zur navigationszielabhängigen Einstellung wenigstens eines Fahrzeugparameters bereitgestellt, mit den Schritten Eingabe eines Navigationsziels, Ermitteln wenigstens einer mit dem Navigationsziel assoziierten Zusatzinformation, Bestimmen wenigstens eines Fahrzeugparameters, der einzustellen ist, abhängig von der ermittelten Zusatzinformation, und Einstellen des wenigstens einen bestimmten Fahrzeugparameters.

Die Eingabe des Navigationsziels kann an einer Benutzerschnittstelle erfolgen, insbesondere in dem Fahrzeug.

Wenn für das Navigationsziel mehr als eine Zusatzinformation ermittelt wird, wird eine Selektionsoption ausgegeben, die eine Auswahl einer Zusatzinformation erlaubt, wobei die Selektionsoption, vorzugsweise graphisch, an der Benutzerschnittstelle dargestellt wird, insbesondere in dem Fahrzeug.

Die Eingabe des Navigationsziels kann von außerhalb des Fahrzeugs erfolgen, insbesondere mittels eines Kommunikationsendgeräts. Das Fahrzeug kann eine Kommunikationsschnittstelle aufweisen, über die das Fahrzeug direkt und/oder indirekt mit dem Kommunikationsendgerät verbindbar ist.

Zur Ermittlung der Zusatzinformation wird auf einen externen Speicher zugegriffen. Durch eine Steuereinheit des Fahrzeugs, wird überprüft, ob eine Verbindung mit dem externen Speicher herstellbar ist und/oder besteht. Wenn dies nicht der Fall ist, wird lediglich auf den internen Speicher zugegriffen.

Falls keine Zusatzinformation ermittelbar ist, wird der wenigstens eine Fahrzeugparameter auf einen vorbestimmten Parameterwert eingestellt. Eine Abfrage kann ausgegeben werden, ob die Einstellung erfolgen soll. Der vorbestimmte Parameterwert ist in dem internen Speicher gespeichert und kann daraus abgerufen werden.

Der wenigstens eine Fahrzeugparameter kann graduell eingestellt werden. Er kann abhängig von einer zeitlichen und/oder räumlichen Distanz zu dem Navigationsziel eingestellt werden, wobei die Distanz vorzugsweise durch eine Navigationseinheit berechnet wird.

Eine Auswahl einstellbarer Fahrzeugparameter, ein Wertebereich für die Einstellung des wenigstens einen Fahrzeugparameters und/oder eine funktionale Abhängigkeit der Einstellung des wenigstens einen Fahrzeugparameters von anderen Fahrzeugparametern kann durch einen Nutzer definiert werden, der/die insbesondere als Einstellungsprofil in dem internen Speicher abgelegt wird.

Die Steuereinheit kann zur Einstellung des wenigstens einen Fahrzeugparameters wenigstens ein Steuergerät ansteuern.

In dem internen Speicher kann eine, insbesondere durch den Nutzer veränderbare, Konfiguration abgelegt sein, die festlegt, ob eine Einstellung des wenigstens einen Fahrzeugparameters erfolgen, ob der wenigstens eine Fahrzeugparameter automatisch eingestellt werden, ob der wenigstens eine Fahrzeugparameter nur auf eine Eingabeaktion des Nutzers hin eingestellt werden und/oder welcher Fahrzeugparameter auf welchen Fahrzeugparameterwert eingestellt werden soll.

Dem Nutzer kann angezeigt werden, welche Einstellungen auf Basis der Zusatzinformationen erfolgen. Es kann eine Selektionsoption ausgegeben werden, die es erlaubt, Fahrzeugparameter auszuwählen, die einzustellen sind.

In dem internen Speicher sind Fahrzeugparametervorgaben in Assoziation mit der Zusatzinformation gespeichert. Zu der Zusatzinformation wird wenigstens eine assoziierte Fahrzeugparametervorgabe ermittelt und der wenigstens eine Fahrzeugparameter wird auf Basis der ermittelten wenigstens einen assoziierten Fahrzeugparametervorgabe eingestellt.

Abhängig von einem vorangegangenen Navigationsziel kann für das Navigationsziel eine Fahrzeugparametereinstellung erfolgen.

In einem weiteren Aspekt wird ein Fahrzeug bereitgestellt, aufweisend wenigstens eine Benutzerschnittstelle, die dazu eingerichtet ist, eine Eingabe eines Navigationsziels entgegenzunehmen, und wenigstens eine Steuereinheit, die dazu eingerichtet ist, eine mit dem Navigationsziel assoziierte Zusatzinformation zu ermitteln, wobei die Steuereinheit dazu eingerichtet ist, abhängig von der ermittelten Zusatzinformation, wenigstens einen Fahrzeugparameter zu bestimmen, der einzustellen ist, und den wenigstens einen bestimmten Fahrzeugparameter einzustellen.

Die Erfindung wird nunmehr auch mit Blick auf die Figuren beschrieben. Es zeigt:
- Fig. 1: einen schematischen Überblick über das erfindungsgemäße Verfahren,
- Fig. 2: schematisch Komponenten zur Ausführung des erfinderischen Verfahrens,
- Fig. 3: eine weitere Darstellung der Erfindung,
- Fig. 4: ein Anwendungsbeispiel des erfindungsgemäßen Verfahrens,
- Fig. 5: schematisch eine Selektionsoption, und
- Fig. 6: einen detaillierteren Verfahrensablauf.

Unter der Einstellung eines Fahrzeugparameters ist insbesondere die Ansteuerung einer oder mehrerer Steuergeräte eines Fahrzeugs zu verstehen. Die Ansteuerung der einen oder mehreren Steuergeräte erfolgt so, dass das entsprechend angesteuerte Steuergerät eine Fahrzeugkomponente derart steuert, dass die Einstellung des Fahrzeugparameters verwirklicht wird. Beispiele für Fahrzeugparameter, die einstellbar sind, sind Beleuchtungsparameter (z. B. Farbe, Farbtemperatur und/oder ein Dimmgrad), Parameter einer Medienwidergabe (z. B. Auswahl eines Medieninhalts), Ausgabeparameter (z. B. von einem Bedufter ausgegebener Duft, Klangparameter, Art der Darstellung von Anzeigen, Klimaparameter), Fahrtparameter (z. B. eine Fahrwerks- und/oder Fahrdynamikeinstellung, Aktivieren/Deaktivieren einer Sitzfunktion, Festlegung einer Sitzeinstellung, Lenksäuleneinstellung) usw. Es können auch mehrere Fahrzeugparameter kombiniert und gleichzeitig oder unabhängig voneinander eingestellt werden. Zudem ist es möglich Fahrzeugparameter in funktionaler Abhängigkeit von der Einstellung anderer Fahrzeugparameter zu definieren.

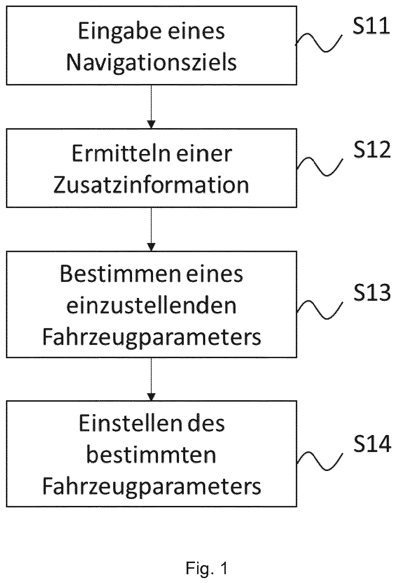

Fig. 1 zeigt schematisch das der Erfindung zugrunde liegende Verfahren als Ablaufdiagramm. In einem ersten Schritt S11 erfolgt zunächst die Eingabe eines Navigationsziels. Das Navigationsziel kann insbesondere durch einen Nutzer vorgegeben bzw. eingegeben werden. Die Eingabe eines Navigationsziels erfolgt dabei vorzugsweise an einer Benutzerschnittstelle, die z. B. als Anzeige-EingabeEinheit ausgebildet sein kann. Eine Anzeigeeinheit der Benutzerschnittstelle kann dabei von einer Eingabeeinheit der Benutzerschnittstelle örtlich getrennt sein. In einer Ausgestaltung der Erfindung erfolgt die Eingabe des Navigationsziels über eine im Wesentlichen bekannte Navigationseinheit, bzw. ein Navigationssystem. Die Benutzerschnittstelle kann in einem Fahrzeug auch von der eigentlichen Navigationseinheit separiert sein.

In einem zweiten Schritt S12 wird eine Zusatzinformation zu dem Navigationsziel ermittelt. Dazu kann bspw. eine Steuereinheit in dem Fahrzeug auf einen internen Speicher, d. h. einen im Fahrzeug vorgesehenen Speicher, und/oder einen externen Speicher, d. h. einen außerhalb des Fahrzeugs vorgesehenen Speicher, zugreifen. Zur Abfrage, insbesondere des externen Speichers, kann die Steuereinheit eine Kommunikationsschnittstelle verwenden, die in dem Fahrzeug für eine Kommunikation bereitgestellt ist. Insbesondere kann es sich bei der Kommunikationsschnittstelle um eine Mobilfunkschnittstelle gemäß einem bekannten Funkstandard (GSM, 3G, LTE, Wifi, Bluetooth, ...) handeln. Die Steuereinheit kann mittels der Kommunikationsschnittstelle des Fahrzeugs auf ein entferntes Kommunikationssystem (z. B. Remote System, Server, Cloud-Speicher, ...) zugreifen, das den externen Speicher umfasst, um die Zusatzinformation zu ermitteln. Insbesondere erfolgt eine Datenbankabfrage an den internen und/oder externen Speicher, wobei das Navigationsziel als Abfrageparameter übermittelt wird.

Abhängig von der Zusatzinformation wird in einem dritten Schritt S13 wenigstens ein einzustellender Fahrzeugparameter bestimmt. Insbesondere können in dem internen und/oder externen Speicher bereits Parametervorgaben für Fahrzeugparameter hinterlegt sein, die zusammen mit den Zusatzinformationen aus dem internen und/oder externen Speicher oder anderen Speichern abrufbar sind. Es ist auch möglich, dass abhängig von den ermittelten Zusatzinformationen eine weitere Abfrage an den internen und/oder externen Speicher erfolgt, um Parametervorgaben für den wenigstens einen Fahrzeugparameter basierend auf den Zusatzinformationen aus dem internen und/oder externen Speicher abzurufen.

In einem vierten Schritt S14 erfolgt die tatsächliche Einstellung des wenigstens einen Fahrzeugparameters. Die Steuereinheit kann wenigstens eines der Steuergeräte ansteuern, um die Einstellung des wenigstens einen Fahrzeugparameters abhängig von der Zusatzinformation vorzunehmen und so den wenigstens einen Fahrzeugparameter einstellen. Insbesondere kann der wenigstens eine Fahrzeugparameter auf Parametervorgaben eingestellt werden, die zusammen mit den Zusatzinformationen ermittelt wurden. Die Parametervorgaben können dabei von dem Nutzer anpassbar und/oder selektierbar sein. Beispiele für Steuergeräte können bspw. Steuergeräte für eine Medienwiedergabe, eine Innenraumbeleuchtung und/oder einen Bedufter, ein Klimagerät, ein Anzeigegerät, ein Eingabegerät und/oder ein die Fahreigenschaften des Fahrzeugs beeinflussendes Steuergerät sein. Die Steuereinheit kann mit den Steuergeräten über eine bekannte weitere Kommunikationsschnittstelle und insbesondere über ein Fahrzeugkommunikationsnetz kommunizieren (z. B. einem CAN-Bus oder einem IPbasierten Netzwerk).

Die Zusatzinformation betrifft insbesondere ein an dem Navigationsziel stattfindendes Ereignis und/oder eine Eigenschaft des Navigationsziels und umfasst somit mit dem Navigationsziel verknüpfte Daten. Das Navigationsziel ist dabei insbesondere eine geographische Position, bzw. ein vordefinierter oder durch den Nutzer definierbarer Bereich um eine geographische Position. Der externe Speicher kann somit ein (online) Ereignisportal und/oder Nachschlagewerk sein oder mit einem solchen funktional verbunden sein. Die Zusatzinformation kann zumindest teilweise durch ein solches Portal und/oder Nachschlagewerk zur Verfügung gestellt werden.

Ist für ein Navigationsziel mehr als eine Zusatzinformation hinterlegt und wird folglich mehr als eine Zusatzinformation als Abfrageergebnis von der Steuereinheit erfasst, so kann einem Nutzer eine Selektionsoption angezeigt werden, die es erlaubt, aus den zur Verfügung stehenden Zusatzinformationen auszuwählen. Die Anzeige kann vorteilhafterweise durch die Benutzerschnittstelle erfolgen. Werden also wenigstens zwei Zusatzinformationen aus dem internen und/oder externen Speicher abgerufen, so erhält der Nutzer die Möglichkeit, zwischen den Zusatzinformationen zu wählen, und somit die Fahrzeugparametereinstellungen.

Der Nutzer kann auch Parametervorgaben für bestimmte Ereignisse und/oder Eigenschaften definieren, die in dem internen und/oder externen Speicher gespeichert werden. Diese können dann aufgerufen werden, wenn eine Zusatzinformation ermittelt wird, mit der die nutzerbestimmte Parametervorgabe assoziiert ist. Insbesondere kann die Zusatzinformation ein Ereignis oder eine Ereignisart identifizieren, für das ein oder mehrere Parameter in dem internen und/oder externen Speicher hinterlegt sind.

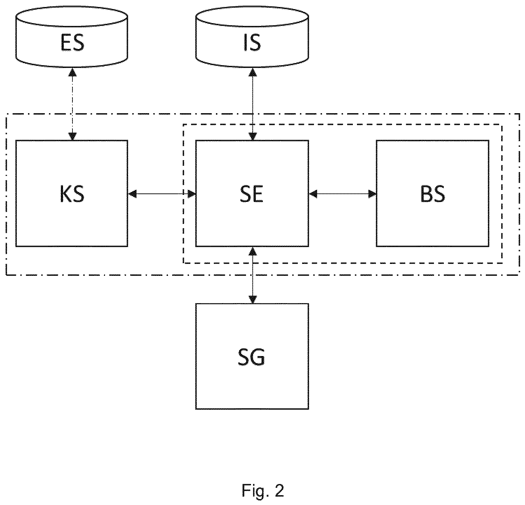

Fig. 2 zeigt exemplarisch Komponenten, die zur Ausführung des Verfahrens aus Fig. 1 eingesetzt werden können. Gezeigt ist dabei die Benutzerschnittstelle BS, die funktional mit einer Steuereinheit SE verbunden ist. Insbesondere besteht die Möglichkeit einer bidirektionalen Kommunikation zwischen der Benutzerschnittstelle BS und der Steuereinheit SE. Durch den gestrichelten Rahmen ist angedeutet, dass die Steuereinheit SE und die Benutzerschnittstelle BS auch als eine einzige Einheit vorgesehen sein können. Weiter ist ein interner Speicher IS dargestellt, auf den die Steuereinheit SE zugreifen kann, um eine Zusatzinformation und/oder Parametervorgaben abzurufen. Der interne Speicher kann auch in die Steuereinheit und/oder andere Komponenten integriert sein.

Zudem ist eine Kommunikationsschnittstelle KS dargestellt, die, wie mit dem gestrichpunkteten Rahmen angezeigt, ebenfalls mit der Steuereinheit SE und/oder der Benutzerschnittstelle BS kombiniert sein kann. Die Kommunikationsschnittstelle KS, die insbesondere als Schnittstelle zur drahtlosen Kommunikation ausgestaltet ist, dient hierbei als optionale Komponente für die Kommunikation mit einem externen Speicher ES. Die Kommunikationsschnittstelle kann auch für andere Kommunikationsaufgaben des Fahrzeugs, und insbesondere für eine Datenkommunikation und eine Übermittlung von Telemetriedaten, ebenso wie für eine Übermittlung anderer Kommunikationsdaten, verwendet werden. Der Zugriff auf den externen Speicher ES ist optional, da auch in dem internen Speicher IS Parametervorgaben oder Parameterprofile für und als Zusatzinformation hinterlegt sein können. Der Vorteil der Verwendung eines externen Speichers ES liegt indessen darin, dass eine aktuelle Zusatzinformation zu dem Navigationsziel, insbesondere zu Ereignissen an dem Navigationsziel und/oder Eigenschaften des Navigationsziels, abgerufen werden können. Die Doppelpfeile symbolisieren jeweils eine bidirektionale Kommunikationsmöglichkeit.

Exemplarisch ist zudem ein Steuergerät SG dargestellt, das von der Steuereinheit SE ansteuerbar ist, um den wenigstens einen Fahrzeugparameter einzustellen. Es kann zudem vorgesehen sein, dass die Steuereinheit SE einen Status des Steuergeräts SG ausliest, um beispielsweise zu bestimmen, welche Parameter bzw. Parameterwerte aktuell in und/oder durch das Steuergerät eingestellt sind.

Bei der Benutzerschnittstelle BS kann es sich insbesondere um einen Touch-Screen, jedoch auch um eine Kombination einer Eingabeeinheit und einer Anzeigeeinheit handeln. Insbesondere ist die Benutzerschnittstelle BS ein Infotainment-System, insbesondere eine Navigationseinheit bzw. ein Navigationssystem. Die Navigationszieleingabe und Auswahl von Selektionsoptionen erfolgt bevorzugt mittels der Eingabeeinheit der Benutzerschnittstelle BS. Insbesondere kann die Benutzerschnittstelle BS eine iDrive-Einheit aufweisen.

Die Steuereinheit SE fragt den internen Speicher IS und/oder den externen Speicher ES ab und übermittelt dabei Informationen, die das Navigationsziel, einen definierten Bereich um den Zielort und/oder eine berechnete Ankunftszeit an dem Navigationsziel definieren. Der interne Speicher IS und/oder der externe Speicher ES ermittelt daraufhin mit dem Navigationsziel assoziierte Zusatzinformationen und sendet diese an die Steuereinheit SE (direkt oder indirekt) zurück. Die Steuereinheit SE wertet dann die empfangenen Zusatzinformationen aus und überprüft insbesondere, ob mehr als eine Zusatzinformation ermittelt wurde. Ist dies der Fall, wurden also wenigstens zwei Zusatzinformationen ermittelt, so veranlasst die Steuereinheit SE eine Darstellung der Selektionsoption. Mittels der Benutzerschnittstelle BS kann der Nutzer dann eine der ermittelten Zusatzinformationen auswählen.

Die Steuereinheit SE wertet die Auswahl aus. Die Steuereinheit SE ermittelt dann wenigstens einen oder mehrere einzustellende Fahrzeugparameter. Informationen über den/die einzustellenden Fahrzeugparameter können bereits in der Zusatzinformation enthalten sein. Alternativ oder zusätzlich kann die Steuereinheit SE die Parameterwerte zu der wenigstens einen Zusatzinformation separat ermitteln. Hierzu kann die Steuereinheit SE wiederum auf den internen und/oder externen Speicher IS, ES zugreifen. Der Speicher, auf den zugegriffen wird, kann verschieden zu dem Speicher sein, von dem die Zusatzinformation ermittelt wurde. Insbesondere kann bspw. die Zusatzinformation als Ereignistyp "Konzert" angeben und die Steuereinheit SE kann dann hinterlegte Parametervorgaben für den Ereignistyp "Konzert" abrufen. Die Steuereinheit kann dann wenigstens das Steuergerät SG ansteuern, um den entsprechenden wenigstens einen Fahrzeugparameter auf die Parametervorgaben einzustellen.

Stellt der externe Speicher ES die Zusatzinformation bereit, so kann die Kommunikationsschnittstelle KS zunächst prüfen, ob eine Verbindung zu dem externen Speicher ES besteht oder herstellbar ist. Besteht keine Verbindung und ist keine Verbindung zu dem externen Speicher ES herstellbar, so kann die Steuereinheit SE auf den internen Speicher IS zugreifen. Es können dann dort bspw. für eine Navigationszielvorgabe gespeicherte Parametervorgaben bzw. die Zusatzinformationen abgerufen werden. So können z. B. auch die Default-Werte für ein Navigationsziel gesetzt werden, wenn nicht auf den externen Speicher ES zugegriffen werden kann.

Weiter kann, sofern für ein Navigationsziel keine Zusatzinformation ermittelt wird, durch die Steuereinheit SE eine vorbestimmte Zusatzinformation ausgewertet werden, die einen oder mehrere vorbestimmte Parameterwerte für den wenigstens einen Fahrzeugparameter vorgibt. Die abhängig von der Zusatzinformation einzustellenden Fahrzeugparameter können dabei auch durch den Nutzer, insbesondere durch eine Eingabe über die Benutzerschnittstelle BS, geändert und/oder vorgegeben werden. Es kann auch zu einer ermittelten Zusatzinformation bspw. ein bestimmtes Parameterprofil in dem internen oder externen Speicher IS, ES abgelegt werden. So kann der Nutzer bspw. für eine Eigenschaft, einen Ereignistyp und/oder ein bestimmtes Ereignis wenigstens einen Fahrzeugparameter vorgeben, der, wenn Zusatzinformationen betreffend diese Eigenschaft, diesen Ereignistyp und/oder dieses Ereignis ermittelt werden, eingestellt werden soll. Zudem kann so festgelegt werden, auf welchen Wert der Fahrzeugparameter eingestellt werden soll.

Die Einstellung des wenigstens einen Fahrzeugparameters kann insbesondere graduell erfolgen, sodass sich ein Übergang von einem Startwert des Fahrzeugparameters zu einem einzustellenden Wert ergibt. Durch diese graduelle Einstellung kann ein sanfter Übergang zwischen dem Startwert des Fahrzeugparameters, d. h. vor einer Eingabe des Navigationsziels, und dem einzustellenden Parameterwert nach Eingabe des Navigationsziels erfolgen. Die Dauer des Übergangs bzw. der Grad der Änderung zwischen zwei Fahrzeugparametern kann durch den Nutzer vorgegeben werden und in dem internen und/oder externen Speicher IS, ES abgelegt werden. Andererseits kann die Änderung des Parameterwertes auch graduell abhängig von einer zeitlichen oder räumlichen Distanz zu dem Navigationsziel erfolgen. Auch hier kann der Grad der Änderung durch den Nutzer konfiguriert und in dem internen Speicher IS und/oder dem externen Speicher ES abgelegt werden. Eine funktionale Abhängigkeit der Einstellung des wenigstens einen Fahrzeugparameters von wenigstens einem weiteren Fahrzeugparameter, ein Wertebereich für den wenigstens einen Fahrzeugparameter und/oder eine Auswahl des Fahrzeugparameters durch den Nutzer kann so auch definiert und gespeichert werden. So kann für verschiedene Zusatzinformationen, die für ein Navigationsziel ermittelt werden, jeweils wenigstens ein vorgegebenes Einstellungsprofil durch den Nutzer festgelegt werden.

In dem internen Speicher IS kann folglich eine durch den Nutzer veränderbare Konfiguration abgelegt sein/werden, die definiert, ob eine Einstellung des wenigstens einen Fahrzeugparameters erfolgen soll, ob der wenigstens eine Parameter automatisch eingestellt werden soll, oder ob der Fahrzeugparameter nur auf eine Eingabeaktion des Nutzers hin, also manuell, eingestellt werden soll. Die Eingabeaktion kann dabei wiederum mittels der Benutzerschnittstelle BS erfolgen. Vor Einstellung des wenigstens einen Fahrzeugparameters kann über die Benutzerschnittstelle BS auch eine Ausgabe, vorzugsweise eine grafische Ausgabe, erfolgen, die angibt, welche Parameter aufgrund der ermittelten Zusatzinformation eingestellt werden sollen. Über eine Auswahl bzw. Selektionsoption erhält der Nutzer dann die Möglichkeit, wenigstens einen Fahrzeugparameter auszuwählen, der anschließend eingestellt wird. Zudem kann es vorgesehen sein, dass der Nutzer die Möglichkeit erhält, die einzelnen Fahrzeugparameter anzupassen, bevor sie eingestellt werden.

Ist in dem internen Speicher IS und/oder externen Speicher ES lediglich eine Zusatzinformation zu dem ausgewählten Navigationsziel hinterlegt, so kann diese Zusatzinformation, bspw. eine Art des Zielorts bzw. eine Ereignisart, wiedergeben, die an dem Zielort zu erwarten ist. In dem internen Speicher IS und/oder externen Speicher ES können für die Art des Zielortes bzw. die Art des Ereignisses Parameter oder Parametersätze hinterlegt werden. Diese Parametervorgaben sind dann in Assoziation mit der Zusatzinformation aus dem internen Speicher IS und/oder externen Speicher ES abgelegt, und können daher auf Basis der aus dem internen Speicher IS und/oder externen Speicher ES abgerufenen Zusatzinformation ermittelt werden.

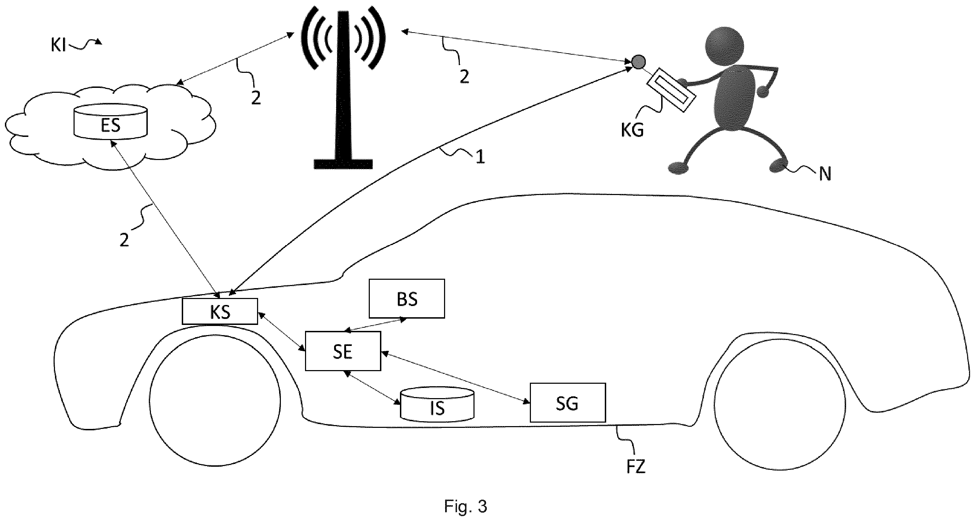

Selbstverständlich kann es auch vorgesehen sein, dass, wie in Fig. 3 illustriert ist, das Navigationsziel und/oder ggf. eine Auswahl von Zusatzinformationen auf einem Kommunikationsendgerät KG und insbesondere von außerhalb des Fahrzeugs erfolgt. In Fig. 3 sind hierbei im Wesentlichen die Komponenten aus Fig. 2 gezeigt. Dabei weist das Kommunikationsendgerät KG eine eigene Kommunikationsschnittstelle auf, die direkt oder indirekt mit der Kommunikationsschnittstelle KS eines Fahrzeugs FZ verbindbar ist. Unter direkter Kommunikation kann dabei bspw. eine direkte Verbindung mittels Bluetooth, Wifi, NFC/RFID o.ä. verstanden werden und insbesondere eine Ad-hoc-Verbindung zwischen dem Kommunikationsendgerät KG und dem Fahrzeug FZ. Die direkte Kommunikation zwischen Kommunikationsendgerät KG und dem Fahrzeug FZ ist durch den Kommunikationspfad 1 veranschaulicht. Es kann jedoch auch eine indirekte Kommunikation zwischen dem Kommunikationsendgerät KG und dem Fahrzeug FZ erfolgen, bspw. über eine im Wesentlichen bekannte Kommunikationsinfrastruktur Kl. Die indirekte Kommunikation zwischen Kommunikationsendgerät KG und dem Fahrzeug FZ ist durch den Kommunikationspfad 2 veranschaulicht. Dabei wird jeweils das Navigationsziel von dem Kommunikationsendgerät KG an das Fahrzeug FZ übermittelt. Die Steuereinheit SE des Fahrzeugs FZ wertet die Navigationszieldaten aus und legt das Navigationsziel für eine nachfolgende Fahrt fest. Auch eine selektierte Zusatzinformation wird von dem Kommunikationsendgerät KG zu dem Fahrzeug FZ übertragen. Selbstverständlich ist zu verstehen, dass die Kommunikation zwischen dem Kommunikationsendgerät KG und dem Fahrzeug auch über gängige Telekommunikationsverfahren wie Mobilfunknetze und entsprechende Protokolle (GSM, 3/4/5G, LTE, ...) erfolgen kann.

Die Abfrage der Zusatzinformationen zu einem Navigationsziel kann in beiden Fällen durch das Kommunikationsendgerät KG (z. B. PC, Smartphone, Tablet PC, ...) erfolgen, sodass zu dem Fahrzeug FZ lediglich die Information bzgl. der selektierten Zusatzinformation bzw. die Vorgabe für den wenigstens einen Fahrzeugparameter übertragen wird. Wird lediglich eine Information hinsichtlich der selektierten Zusatzinformation an das Fahrzeug übertragen, so kann das Fahrzeug FZ bzw. die Steuereinheit SE die entsprechende einzustellenden Fahrzeugparameter und Parametervorgaben selbst abrufen. Wird lediglich das Navigationsziel von dem Kommunikationsendgerät KG zu dem Fahrzeug FZ übermittelt, so kann die Abfrage, wie oben beschrieben, durch das Fahrzeug FZ bzw. die Steuereinheit SE dahingehend, ob und ggf. welche Zusatzinformation für das eingegebene Navigationsziel vorliegen, durchgeführt werden.

Der interne Speicher IS kann insbesondere in dem Fahrzeug, z. B. in Form eines elektronischen Speichermediums (bspw. einer Festplatte, einem Flash-Speicher, einem ROM- und/oder RAM-Speicher) ausgestaltet sein, und insbesondere als portabler Speicher. Dies ermöglicht einen Austausch von Zusatzinformationen, aber besonders von durch den Nutzer definierten Fahrzeugparametern, die mit einer Zusatzinformation assoziiert sind. Bei einem Speichern von Daten des Nutzers auf dem externen Speicher ES, können diese Daten mit anderen Nutzern geteilt werden. So kann ein Nutzer Einstellungen von Fahrzeugparametern anderen Nutzern zugänglich machen, die von ihm für ein Ereignis und/oder eine Eigenschaft eines Navigationsziels definiert wurden. Diese Einstellungen können dann von den anderen Nutzern in deren Fahrzeuge übertragen werden.

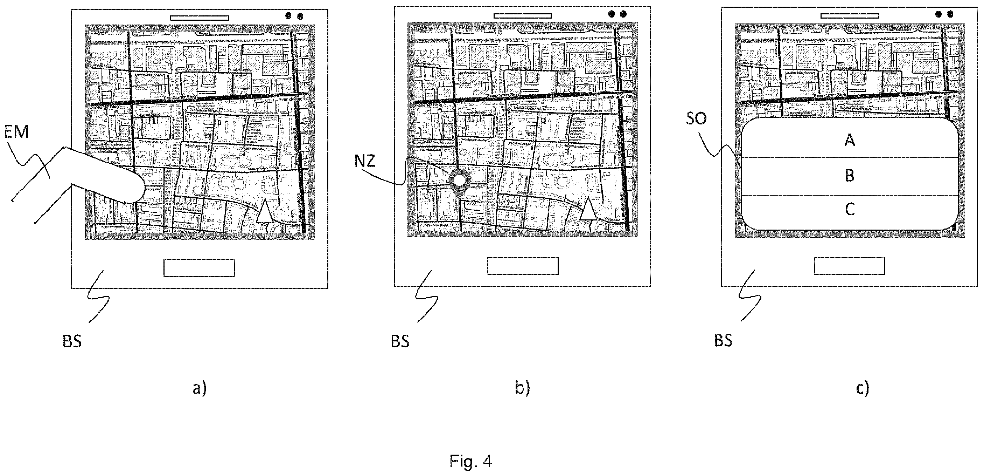

In Figs. 4a-4c ist exemplarisch eine Benutzerschnittstelle BS dargestellt. Mittels eines Eingabemittels EM, bspw. einem Finger oder einem Eingabestift, wird, wie in Figs. 4a und 4b illustriert, ein Navigationsziel NZ festgelegt. Wird dann mehr als eine Zusatzinformation aus dem internen Speicher IS und/oder dem externen Speicher ES ermittelt, so wird eine Selektionsoption SO angezeigt, die die Auswahl betreffend eine Zusatzinformation und damit wenigstens eines einzustellenden Fahrzeugparameters ermöglicht (Fig. 4c). Mittels des Eingabemittels EM kann ein Nutzer dann eine der Optionen auswählen (in Fig. 4c als A, B, C dargestellt).

Als Zusatzinformationen kann also eine Information zu einem Ereignis an dem Navigationsziel NZ oder zu einer Eigenschaft des Navigationsziels NZ ermittelt werden, an das/die angepasst dann wenigstens ein Fahrzeugparameter auf dem Weg zum Navigationsziel NZ eingestellt wird. Vorzugsweise werden dabei Interieur-Parameter bzw. Parameter der Infotainment-Komponenten, aber auch von Fahrerassistenzsystemen eingestellt. Vor allem die Komfortfunktionen werden gemäß der Erfindung dazu eingesetzt, dass einem Nutzer während der Fahrt bereits die Einstimmung auf ein Ereignis an dem Navigationsziel NZ oder eine Eigenschaft des Navigationsziels NZ möglich ist. Die graduelle Änderung des wenigstens einen Fahrzeugparameters erlaubt es, dass bei einer Eingabe eines neuen Zielortes ein Übergang der Einstellung des Fahrzeugparameters zwischen dem alten Navigationsziel NZ und dem neuen Navigationsziel NZ erfolgen kann.

Je nach Art des Navigationsziels NZ und einer vorhandenen Online-Verbindung zu dem externen Speicher ES kann dann die Zusatzinformation aus dem externen bzw. internen Speicher ermittelt werden. Mittels einer Konfiguration kann festgelegt werden, ob die Einstellung der Fahrzeugparameter automatisch aktiviert werden soll, dem Fahrer nach Auswahl des Navigationsziels NZ die Einstellung vorgeschlagen wird, oder ob die Einstellung des wenigstens einen Fahrzeugparameters generell nur manuell erfolgen soll. Über die Benutzerschnittstelle BS können auch Parameter selektiert bzw. Funktionen definiert werden, die durch die Zusatzinformationen bzw. basierend darauf verändert oder aktiviert werden können. Dabei ist eine Definition von Parameterprofilen für einen Navigationszieltyp ebenfalls möglich, bspw. wenn die Zusatzinformation eine bestimmte Art des Navigationsziels NZ (bspw. Wanderparkplatz, Sportstätte, Restaurant, ...) betrifft.

Zusätzlich kann das System bzw. die Steuereinheit SE auch Präferenzen des Fahrers lernen, bspw. dann, wenn eine Selektionsoption SO mehrfach ausgewählt wird. Wenn z. B. eine Selektionsoption SO häufiger gewählt wird, als durch einen Schwellenwert definiert, der insbesondere in dem internen Speicher definiert ist, kann diese Selektionsoption SO als Standardwahl gespeichert werden. Die Fahrzeugparameterdefinitionen des Nutzers können dabei auch auf einem mobilen Datenspeicher gespeichert werden, der zwischen Fahrzeugen austauschbar ist. Die Fahrzeugparameterdefinitionen oder Fahrzeugparameterprofile können so in das neue Fahrzeug übertragen werden. Eine solche Übertragung kann selbstverständlich auch durch eine drahtlose Kommunikation zwischen den Fahrzeugen erfolgen, bspw. dann, wenn die Fahrzeugparametereinstellungen oder Fahrzeugparameterprofile in dem externen Speicher ES gespeichert sind. Ein Nutzer kann dann, z. B. nach einer Authentifizierung an dem externen Speicher ES, auf die Fahrzeugparametereinstellungen oder Fahrzeugparameterprofile zugreifen.

Neben der Anpassung von Komfortfunktionen können auch andere Parameter zusätzlich oder alternativ angepasst werden, um das Fahrverhalten des Fahrzeugs gemäß den ermittelten Zusatzinformationen anzupassen. Beispielsweise kann, wenn das Navigationsziel NZ in einem Naturgebiet liegt, ein bestimmter Fahrmodus, bspw. ein ökonomischer Fahrmodus (ECO-Fahrmodus) eingestellt oder vorgeschlagen, das Licht im Fahrzeug in Richtung eines Grüntons verändert und durch einen Bedufter Waldluft ausgeströmt werden. Zudem kann für das Medienwiedergabegerät ein bestimmtes Klangprofil, bspw. weiter oder hallender Klang, gewählt werden. Zudem können Informationen an den Nutzer ausgegeben werden, insbesondere akustische oder visuelle Informationen, die das Navigationsziel NZ betreffen (Abspielen von Musik, Ausgabe von Sprache, Abspielen von Medieninhalten).

Ist bspw. das Navigationsziel NZ ein Parkplatz eines Schwimmbades, so kann durch die Zusatzinformation das Ereignis "Schwimmen" definiert werden, wodurch der wenigstens eine Fahrzeugparameter dahingehend geändert wird, dass die Innenraumbeleuchtung einen Blauton annimmt und ein Bedufter bspw. Meeresduft ausströmen lässt.

Es kann auch abhängig von einem vorangegangenen Navigationsziel für das Navigationsziel NZ eine abhängige Fahrzeugparametereinstellung erfolgen. Es kann so, wenn z. B. das vorangegangene Navigationsziel das Ereignis "Fitness-Studio" in der Zusatzinformation definiert, bei einem Navigationsziel NZ "zu Hause" eine Massagefunktion eines Sitzes aktiviert werden. Über das Medienwiedergabegerät kann Entspannungsmusik ausgegeben und die Innenraumbeleuchtung auf warme Farbtöne eingestellt werden.

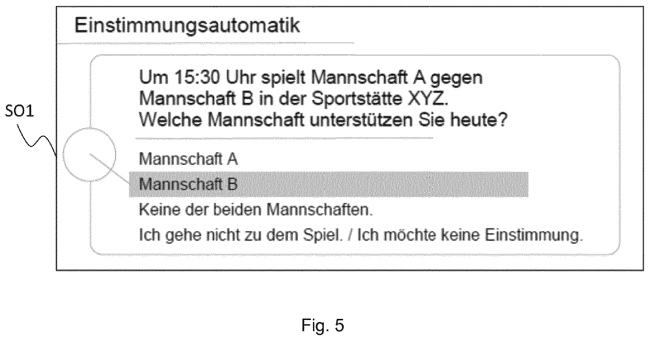

Während die oben genannten Beispiele jeweils lediglich mit Zugang zu einem internen Speicher ES verwirklicht werden können, kann vor allem auch in einem Online-Szenario, d. h. bei Zugriff auf einen externen Speicher ES, eine differenziertere Einstellung von Fahrzeugparametern erfolgen. Beispielsweise kann bei Auswahl eines Fußballstadions als Navigationsziel NZ eine Abfrage bei einem Online-Auskunftsdienst erfolgen, der als Zusatzinformation ausgibt, welche Mannschaften in dem Fußballstadion zur berechneten Ankunftszeit am Fußballstadion spielen. Wie in Fig. 5 gezeigt, kann der Fahrer durch eine weitere Selektionsoption SO1 auswählen, welche Mannschaft er unterstützt. Abhängig davon kann dann das Fahrzeug FZ durch Einstellung des wenigstens einen Fahrzeugparameters in einen sportlichen Fahrmodus wechseln und das Innenraumlicht kann die dominierende Farbe annehmen, die der jeweiligen Mannschaft zugeordnet ist. Auch können über das Medienwiedergabegerät mit der ausgewählten Mannschaft assoziierte Medieninhalte wie Mannschaftshymne, Fan- und Fußballlieder ausgegeben werden. Zudem können akustisch oder visuell Daten zu der Veranstaltung ausgegeben werden. Auch kann vorgesehen sein, dass bei Wahl eines Navigationsziels NZ noch für einen bestimmten oder konfigurierbaren Zeitraum Informationen zu dem vorherigen Navigationsziel, insbesondere zu einem Ereignis oder betreffend das vorherige Navigationsziel angezeigt, ausgegeben bzw. entsprechende Fahrzeugparameter eingestellt werden und/oder eingestellt bleiben. So können bspw. nach dem Mannschaftsspiel noch das Spiel betreffende Informationen auf einer Weiterfahrt angezeigt bzw. ausgegeben werden. Ein gradueller Übergang der Fahrzeugparameter, die für das vorherige Navigationsziel eingestellt wurden, zu den Fahrzeugparametern, die für das Navigationsziel NZ eizustellen sind, kann von dem Nutzer des Fahrzeugs FZ als "Ausklingen" eines Ereignisses wahrgenommen werden.

In einem weiteren Beispiel wird als Navigationsziel NZ ein Konzertveranstaltungsort eingegeben und durch Online-Abfrage an den externen Speicher ES eine Zusatzinformation zu dem Konzert bzw. dem Künstler ermittelt, der insbesondere in einem vordefinierten Zeitraum um einen berechneten Ankunftszeitpunkt an dem Zielort auftritt. Sind mehrere Veranstaltungen für das Navigationsziel NZ hinterlegt, so kann wiederum eine Selektionsoption SO, SO1 an den Nutzer ausgegeben werden, sodass eine der Veranstaltungen ausgewählt werden kann. Auf dem Weg zum Navigationsziel NZ können dann z. B. Live-Aufnahmen des Künstlers über die Medienwiedergabeanlage des Fahrzeugs FZ bzw. Hintergrundinformationen an den Nutzer ausgegeben werden.

Als externer Speicher ES kann bspw. eine Veranstaltungsauskunft dienen, die Informationen zu Veranstaltungen in Verbindung mit Navigationszielen NZ oder geographischen Bereichen speichert. Insbesondere können von dem externen Speicher ES Schnittstellen zu anderen Datenbanken wie Mediendatenbanken und/oder Nachschlagewerken bereitgestellt werden.

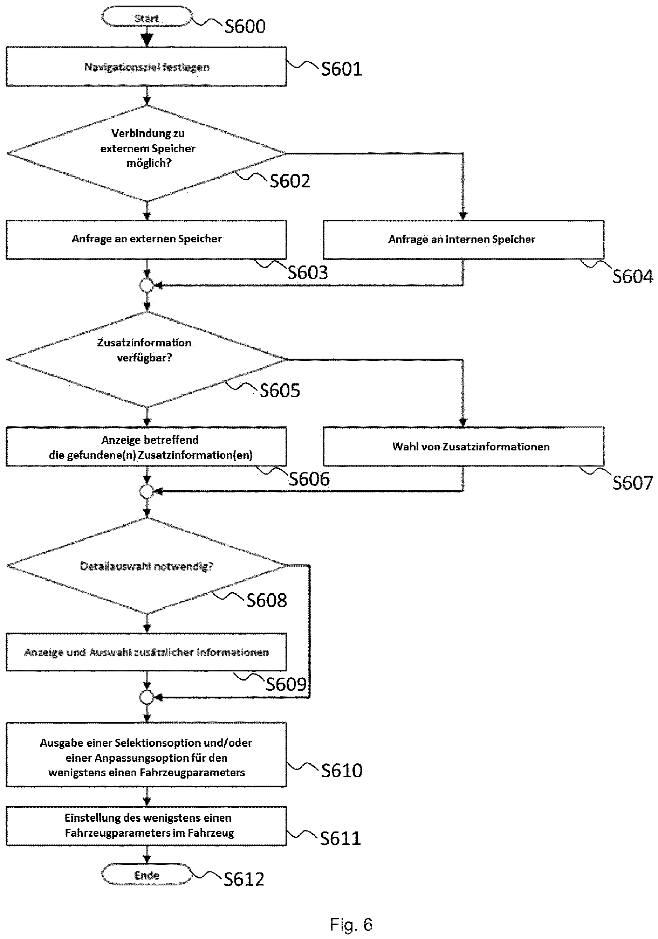

In Fig. 6 ist ein detaillierter Verfahrensablauf gezeigt. In Schritt S600 beginnt der Verfahrensablauf. In Schritt S601 wird ein Navigationsziel NZ eingegeben. In Schritt S602 wird geprüft, ob die Verbindung zu dem externen Speicher ES möglich ist. Ist dies der Fall, so erfolgt in Schritt S603 in einem Online-Szenario die Abfrage der Zusatzinformationen bei dem externen Speicher ES. Beispielsweise kann als externer Speicher ES die Veranstaltungsauskunft abgefragt werden, indem z. B. die Abfrageparameter "Navigationsziel" und/oder "berechnete Ankunftszeit" mit der Anfrage übermittelt werden. Ist keine Verbindung zu dem externen Speicher ES möglich, so erfolgt eine Abfrage des internen Speichers IS in Schritt S604, ob zu dem Navigationsziel NZ eine Zusatzinformation verfügbar ist.

In Schritt S605 wird geprüft, ob Zusatzinformationen für das Navigationsziel NZ verfügbar sind. Ist dies der Fall, so erfolgt in Schritt S606 eine Anzeige der ermittelten Zusatzinformationen bzw. eine diese betreffende Selektionsoption SO, die eine Auswahl von Ereignissen an dem oder Eigenschaften des Zielorts ermöglichen. Wird indessen keine Zusatzinformation ermittelt, so wird in Schritt S607 eine Auswahl ermöglicht, die es erlaubt verschiedene Zusatzinformationen auszuwählen, die insbesondere in dem internen Speicher IS als Vorgaben hinterlegt sind. Der Nutzer kann dann manuell eine Zusatzinformation bestimmen, anhand derer dann der mindestens eine Fahrzeugparameter eingestellt wird.

Mit den Zusatzinformationen können auch weitere Daten übermittelt werden, die eine spezifischere Auswahl der einzustellenden Fahrzeugparameter ermöglicht. In Schritt S608 wird daher geprüft, ob eine detailliertere Auswahl möglich und/oder erforderlich ist. Ist dies der Fall, so wird in Schritt S609 dem Nutzer eine Auswahl zusätzlicher Informationen präsentiert. In Schritt S610 erfolgt eine optionale Ausgabe einer Auswahlmöglichkeit von Fahrzeugparametern, die eingestellt werden sollen. Schließlich erfolgt in Schritt S611 die Einstellung der entsprechenden Fahrzeugparameter durch Ansteuerung der Steuergeräte. In Schritt S611 endet dieser exemplarische Verfahrensablauf.

## Patentansprüche

1. Verfahren zur navigationszielabhängigen Einstellung wenigstens eines Fahrzeugparameters, mit den Schritten,
- Eingabe (S11) eines Navigationsziels (NZ),
- Ermitteln (S12) wenigstens einer mit dem Navigationsziel assoziierten Zusatzinformation,
- Bestimmen (S13) wenigstens eines Fahrzeugparameters, der einzustellen ist, abhängig von der ermittelten Zusatzinformation, und
- Einstellen (S14) des wenigstens einen bestimmten Fahrzeugparameters,
wobei zur Ermittlung der Zusatzinformation auf einen externen Speicher (ES) zugegriffen wird,
wobei in einem internen Speicher (IS) Fahrzeugparametervorgaben in Assoziation mit der Zusatzinformation gespeichert sind, und wobei zu der Zusatzinformation wenigstens eine assoziierte Fahrzeugparametervorgabe ermittelt wird und der wenigstens eine Fahrzeugparameter auf Basis der ermittelten wenigstens einen assoziierten Fahrzeugparametervorgabe eingestellt wird,
wobei durch eine Steuereinheit (SE) des Fahrzeugs (FZ) überprüft wird, ob eine Verbindung mit dem externen Speicher (ES) herstellbar ist und/oder besteht, und wobei, falls dies nicht der Fall ist, lediglich auf den internen Speicher (IS) zugegriffen wird und der wenigstens eine Fahrzeugparameter auf einen vorbestimmten Parameterwert eingestellt wird, der im internen Speicher (IS) gespeichert ist, und
wobei, wenn für das Navigationsziel (NZ) mehrere Zusatzinformationen ermittelt werden, an einer Benutzerschnittstelle (BS) eine Selektionsoption (SO) angezeigt wird, die eine Auswahl einer Zusatzinformation aus den mehreren Zusatzinformationen und damit des wenigstens einen Fahrzeugparameters, der einzustellen ist, erlaubt.

2. Verfahren nach Anspruch 1, wobei die Eingabe des Navigationsziels an der Benutzerschnittstelle (BS) erfolgt, insbesondere in dem Fahrzeug (FZ).

3. Verfahren nach Anspruch 1 oder 2, wobei die Selektionsoption (SO) graphisch an der Benutzerschnittstelle (BS) ausgegeben wird.

4. Verfahren nach einem der vorgehenden Ansprüche, wobei die Eingabe des Navigationsziels (NZ) von außerhalb des Fahrzeugs (FZ) erfolgt, insbesondere mittels eines Kommunikationsendgeräts (KG), wobei das Fahrzeug (FZ) eine Kommunikationsschnittstelle (KS) aufweist, über die das Fahrzeug direkt und/oder indirekt mit dem Kommunikationsendgerät (KG) verbindbar ist.

5. Verfahren nach einem der vorgehenden Ansprüche, wobei eine Abfrage ausgegeben wird, ob die Einstellung des der vorbestimmten Parameterwerts erfolgen soll.

6. Verfahren nach einem der vorgehenden Ansprüche, wobei der wenigstens eine Fahrzeugparameter graduell eingestellt wird, und insbesondere abhängig von einer zeitlichen und/oder räumlichen Distanz zu dem Navigationsziel (NZ), wobei die Distanz vorzugsweise durch eine Navigationseinheit berechnet wird.

7. Verfahren nach einem der vorgehenden Ansprüche, wobei eine Auswahl einstellbarer Fahrzeugparameter, ein Wertebereich für die Einstellung des wenigstens einen Fahrzeugparameters und/oder eine funktionale Abhängigkeit der Einstellung des wenigstens einen Fahrzeugparameters von anderen Fahrzeugparametern durch einen Nutzer (N) definierbar ist, und wobei die Auswahl einstellbarer Fahrzeugparameter, der Wertebereich für die Einstellung des wenigstens einen Fahrzeugparameters und/oder die funktionale Abhängigkeit der Einstellung des wenigstens einen Fahrzeugparameters, insbesondere als Einstellungsprofil, in dem internen Speicher (IS) abgelegt werden.

8. Verfahren nach einem der vorgehenden Ansprüche, wobei die Steuereinheit (SE) zur Einstellung des wenigstens einen Fahrzeugparameters wenigstens ein Steuergerät (SG) ansteuert.

9. Verfahren nach einem der vorgehenden Ansprüche, wobei in dem internen Speicher (IS) eine, insbesondere durch den Nutzer veränderbare, Konfiguration abgelegt ist, die anzeigt, ob eine Einstellung des wenigstens einen Fahrzeugparameters erfolgen soll, ob der wenigstens eine Fahrzeugparameter automatisch eingestellt werden soll, ob der wenigstens eine Fahrzeugparameter nur auf eine Eingabeaktion des Nutzers (N) hin eingestellt werden soll und/oder welcher Fahrzeugparameter auf welchen Fahrzeugparameterwert eingestellt werden soll.

10. Verfahren nach einem der vorgehenden Ansprüche, wobei dem Nutzer (N) angezeigt wird, welche Einstellungen auf Basis der Zusatzinformation erfolgen, und wobei insbesondere eine Selektionsoption (SO) ausgegeben wird, die es erlaubt; Fahrzeugparameter auszuwählen, die einzustellen sind.

11. Verfahren nach einem der vorgehenden Ansprüche, wobei abhängig von einem vorangegangenen Navigationsziel für das Navigationsziel (NZ) eine Fahrzeugparametereinstellung erfolgt.

12. Fahrzeug (FZ) aufweisend
- wenigstens eine Benutzerschnittstelle (BS), die dazu eingerichtet ist, eine Eingabe eines Navigationsziels (NZ) entgegenzunehmen, und
- wenigstens eine Steuereinheit (SE), die dazu eingerichtet ist,
eine mit dem Navigationsziel (NZ) assoziierte Zusatzinformation zu ermitteln, abhängig von der ermittelten Zusatzinformation wenigstens einen Fahrzeugparameter zu bestimmen, der einzustellen ist, und
den wenigstens einen bestimmten Fahrzeugparameter einzustellen,
- wobei zur Ermittlung der Zusatzinformation auf einen externen Speicher (ES) zugegriffen wird,
- wobei in einem internen Speicher (IS) Fahrzeugparametervorgaben in Assoziation mit der Zusatzinformation gespeichert sind, und wobei zu der Zusatzinformation wenigstens eine assoziierte Fahrzeugparametervorgabe ermittelt wird und der wenigstens eine Fahrzeugparameter auf Basis der ermittelten wenigstens einen assoziierten Fahrzeugparametervorgabe eingestellt wird,
- wobei durch die wenigstens eine Steuereinheit (SE) des Fahrzeugs (FZ) überprüft wird, ob eine Verbindung mit dem externen Speicher (ES) herstellbar ist und/oder besteht, und wobei, falls dies nicht der Fall ist, lediglich auf den internen Speicher (IS) zugegriffen wird und der wenigstens eine Fahrzeugparameter auf einen vorbestimmten Parameterwert eingestellt wird, der im internen Speicher (IS) gespeichert ist, und
- wobei, wenn für das Navigationsziel (NZ) mehrere Zusatzinformationen ermittelt werden, an einer Benutzerschnittstelle (BS) eine Selektionsoption (SO) angezeigt wird, die eine Auswahl einer Zusatzinformation aus den mehreren Zusatzinformationen und damit des wenigstens einen Fahrzeugparameters, der einzustellen ist, erlaubt.

## Claims

1. Method for adjusting at least one vehicle parameter on the basis of a navigation destination, having the steps of
- inputting (S11) a navigation destination (NZ),
- ascertaining (S12) at least one item of additional information associated with the navigation destination,
- determining (S13) at least one vehicle parameter which is to be adjusted depending on the item of additional information ascertained, and
- adjusting (S14) the at least one determined vehicle parameter, wherein an external memory (ES) is accessed in order to ascertain the item of additional information, wherein vehicle parameter specifications are stored in an internal memory (IS) in association with the item of additional information, and wherein at least one associated vehicle parameter specification is ascertained for the item of additional information and the at least one vehicle parameter is adjusted on the basis of the at least one associated vehicle parameter specification ascertained,
wherein a control unit (SE) of the vehicle (FZ) checks whether a connection to the external memory (ES) can be established and/or exists, and wherein, if this is not the case, only the internal memory (IS) is accessed and the at least one vehicle parameter is adjusted to a predetermined parameter value stored in the internal memory (IS), and
wherein, if a plurality of items of additional information are ascertained for the navigation destination (NZ), a selection option (SO) is displayed on a user interface (BS) and allows an item of additional information to be selected from the plurality of items of additional information and thus allows the at least one vehicle parameter which is to be adjusted to be selected.

2. Method according to Claim 1, wherein the navigation destination is input on the user interface (BS), in particular in the vehicle (FZ).

3. Method according to Claim 1 or 2, wherein the selection option (SO) is output graphically on the user interface (BS).

4. Method according to one of the preceding claims, wherein the navigation destination (NZ) is input from outside the vehicle (FZ), in particular by means of a communication terminal (KG), wherein the vehicle (FZ) has a communication interface (KS) that can be used to connect the vehicle directly and/or indirectly to the communication terminal (KG).

5. Method according to one of the preceding claims, wherein a query as to whether the predetermined parameter value is intended to be adjusted is output.

6. Method according to one of the preceding claims, wherein the at least one vehicle parameter is gradually adjusted, and in particular depending on a temporal and/or spatial distance to the navigation destination (NZ), wherein the distance is preferably calculated by a navigation unit.

7. Method according to one of the preceding claims, wherein a selection of adjustable vehicle parameters, a range of values for adjusting the at least one vehicle parameter and/or a functional dependence of the adjustment of the at least one vehicle parameter on other vehicle parameters can be defined by a user (N), and wherein the selection of adjustable vehicle parameters, the range of values for adjusting the at least one vehicle parameter and/or the functional dependence of the adjustment of the at least one vehicle parameter is/are stored in the internal memory (IS), in particular as an adjustment profile.

8. Method according to one of the preceding claims, wherein the control unit (SE) controls at least one control device (SG) in order to adjust the at least one vehicle parameter.

9. Method according to one of the preceding claims, wherein a configuration, in particular a configuration changeable by the user, is stored in the internal memory (IS) and indicates whether the at least one vehicle parameter is intended to be adjusted, whether the at least one vehicle parameter is intended to be adjusted automatically, whether the at least one vehicle parameter is intended to be adjusted solely in response to an input action of the user (N) and/or which vehicle parameter is intended to be adjusted to which vehicle parameter value.

10. Method according to one of the preceding claims, wherein the user (N) is shown which adjustments are being made on the basis of the item of additional information, and wherein in particular a selection option (SO) is output and allows vehicle parameters which are to be adjusted to be selected.

11. Method according to one of the preceding claims, wherein a vehicle parameter adjustment is made for the navigation destination (NZ) depending on a preceding navigation destination.

12. Vehicle (FZ) having
- at least one user interface (BS) which is configured to receive an input of a navigation destination (NZ), and
- at least one control unit (SE) which is configured to ascertain an item of additional information associated with the navigation destination (NZ), to determine at least one vehicle parameter which is to be adjusted depending on the item of additional information ascertained, and
to adjust the at least one determined vehicle parameter,
- wherein an external memory (ES) is accessed in order to ascertain the item of additional information,
- wherein vehicle parameter specifications are stored in an internal memory (IS) in association with the item of additional information, and wherein at least one associated vehicle parameter specification is ascertained for the item of additional information and the at least one vehicle parameter is adjusted on the basis of the at least one associated vehicle parameter specification ascertained,
- wherein the at least one control unit (SE) of the vehicle (FZ) checks whether a connection to the external memory (ES) can be established and/or exists, and wherein, if this is not the case, only the internal memory (IS) is accessed and the at least one vehicle parameter is adjusted to a predetermined parameter value stored in the internal memory (IS), and
- wherein, if a plurality of items of additional information are ascertained for the navigation destination (NZ), a selection option (SO) is displayed on a user interface (BS) and allows an item of additional information to be selected from the plurality of items of additional information and thus allows the at least one vehicle parameter which is to be adjusted to be selected.

## Revendications

1. Procédé permettant de régler au moins un paramètre de véhicule en fonction d'une destination de navigation, comprenant les étapes consistant à
- entrer (S11) une destination de navigation (NZ),
- établir (S12) au moins une information supplémentaire associée à la destination de navigation,
- déterminer (S13) au moins un paramètre de véhicule à régler, en fonction de l'information supplémentaire établie, et
- régler (S14) ledit au moins un paramètre de véhicule déterminé, dans lequel on accède à une mémoire externe (ES) pour établir l'information supplémentaire,
dans lequel des spécifications de paramètre de véhicule sont stockées dans une mémoire interne (IS) en association avec l'information supplémentaire, et dans lequel au moins une spécification de paramètre de véhicule associée est établie pour l'information supplémentaire, et ledit au moins un paramètre de véhicule est réglé sur la base de ladite au moins une spécification de paramètre de véhicule associée établie, dans lequel une unité de commande (SE) du véhicule (FZ) vérifie si une liaison avec la mémoire externe (ES) peut être établie et/ou existe, et dans lequel, si ce n'est pas le cas, on n'accède qu'à la mémoire interne (IS) et ledit au moins un paramètre de véhicule est réglé sur une valeur de paramètre prédéterminée qui est stockée dans la mémoire interne (IS), et
dans lequel, si plusieurs informations supplémentaires sont établies pour la destination de navigation (NZ), une option de sélection (SO) est affichée au niveau d'une interface utilisateur (BS) qui permet une sélection d'une information supplémentaire parmi les plusieurs informations supplémentaires, et donc dudit au moins un paramètre de véhicule à régler.

2. Procédé selon la revendication 1, dans lequel l'entrée de la destination de navigation est effectuée au niveau de l'interface utilisateur (BS), en particulier dans le véhicule (FZ).

3. Procédé selon la revendication 1 ou 2, dans lequel l'option de sélection (SO) est émise sous forme graphique au niveau de l'interface utilisateur (BS).

4. Procédé selon l'une quelconque des revendications précédentes, dans lequel l'entrée de la destination de navigation (NZ) est effectuée de l'extérieur du véhicule (FZ), en particulier au moyen d'un terminal de communication (KG), le véhicule (FZ) présentant une interface de communication (KS) par laquelle le véhicule peut être relié directement et/ou indirectement au terminal de communication (KG).

5. Procédé selon l'une quelconque des revendications précédentes, dans lequel une interrogation est émise si le réglage de la valeur de paramètre prédéterminée est à effectuer.

6. Procédé selon l'une quelconque des revendications précédentes, dans lequel ledit au moins un paramètre de véhicule est réglé progressivement, et en particulier en fonction d'une distance temporelle et/ou spatiale par rapport à la destination de navigation (NZ), la distance étant de préférence calculée par une unité de navigation.

7. Procédé selon l'une quelconque des revendications précédentes, dans lequel une sélection de paramètres de véhicule réglables, une plage de valeurs pour le réglage dudit au moins un paramètre de véhicule et/ou une dépendance fonctionnelle du réglage dudit au moins un paramètre de véhicule d'autres paramètres de véhicule peuvent être définies par un utilisateur (N), et dans lequel la sélection de paramètres de véhicule réglables, la plage de valeurs pour le réglage dudit au moins un paramètre de véhicule et/ou la dépendance fonctionnelle du réglage dudit au moins un paramètre de véhicule, en particulier sous forme de profil de réglage, sont sauvegardées dans la mémoire interne (IS).

8. Procédé selon l'une quelconque des revendications précédentes, dans lequel l'unité de commande (SE) pilote au moins un appareil de commande (SG) pour régler ledit au moins un paramètre de véhicule.

9. Procédé selon l'une quelconque des revendications précédentes, dans lequel dans la mémoire interne (IS) est sauvegardée une configuration, en particulier modifiable par l'utilisateur, qui indique si un réglage dudit au moins un paramètre de véhicule doit être effectué, si ledit au moins un paramètre de véhicule doit être réglé automatiquement, si ledit au moins un paramètre de véhicule ne doit être réglé que suite à une action d'entrée de l'utilisateur (N), et/ou quel paramètre de véhicule doit être réglé sur quelle valeur de paramètre de véhicule.

10. Procédé selon l'une quelconque des revendications précédentes, dans lequel on affiche pour l'utilisateur (N) quels réglages sont effectués sur la base de l'information supplémentaire, et dans lequel en particulier une option de sélection (SO) est émise qui permet de sélectionner des paramètres de véhicule à régler.

11. Procédé selon l'une quelconque des revendications précédentes, dans lequel un réglage de paramètre de véhicule est effectué pour la destination de navigation (NZ) en fonction d'une destination de navigation précédente.

12. Véhicule (FZ), présentant
- au moins une interface utilisateur (BS) qui est conçue pour recevoir une entrée d'une destination de navigation (NZ), et
- au moins une unité de commande (SE) qui est conçue pour
établir une information supplémentaire associée à la destination de navigation (NZ), déterminer au moins un paramètre de véhicule à régler, en fonction de l'information supplémentaire établie, et
régler ledit au moins un paramètre de véhicule déterminé,
- dans lequel on accède à une mémoire externe (ES) pour établir l'information supplémentaire,
- dans lequel des spécifications de paramètre de véhicule sont stockées dans une mémoire interne (IS) en association avec l'information supplémentaire, et dans lequel au moins une spécification de paramètre de véhicule associée est établie pour l'information supplémentaire, et ledit au moins un paramètre de véhicule est réglé sur la base de ladite au moins une spécification de paramètre de véhicule associée établie,
- dans lequel ladite au moins une unité de commande (SE) du véhicule (FZ) vérifie si une liaison avec la mémoire externe (ES) peut être établie et/ou existe, et dans lequel, si ce n'est pas le cas, on n'accède qu'à la mémoire interne (IS) et ledit au moins un paramètre de véhicule est réglé sur une valeur de paramètre prédéterminée qui est stockée dans la mémoire interne (IS), et
- dans lequel, si plusieurs informations supplémentaires sont établies pour la destination de navigation (NZ), une option de sélection (SO) est affichée au niveau d'une interface utilisateur (BS) qui permet une sélection d'une information supplémentaire parmi les plusieurs informations supplémentaires et donc dudit au moins un paramètre de véhicule qui est à régler.
